# EUROPÄISCHE PATENTSCHRIFT

(11) **EP 1 758 760 B1**
(45) Veröffentlichungstag und Bekanntmachung des Hinweises auf die Patenterteilung: **02.06.2010**
(21) Anmeldenummer: 05766743.8
(22) Anmeldetag: 24.06.2005
(51) Int. Cl.: B60N 2/48

(54) **KOPFSTÜTZE FÜR EINEN FAHRGASTSITZ**
HEADREST FOR A VEHICLE SEAT
APPUIE-TETE POUR UN SIEGE DE VEHICULE

(30) Priorität: 25.06.2004 DE 102004030933
(43) Veröffentlichungstag der Anmeldung: 07.03.2007
(73) Patentinhaber: GRAMMER AG, 92224 Amberg (DE)
(72) Erfinder: MEILLER, Hermann, 92533 Wernberg-Köblitz (DE); CARTER, Raymond, Marina Del Rey, CA 90292 (US); KELLER, Hubert, 92224 Amberg (DE)
(74) Vertreter: Ostriga, Sonnet, Wirths & Roche
(86) Internationale Anmeldenummer: PCT/DE2005/001138
(87) Internationale Veröffentlichungsnummer: WO 2006/000203

(56) Entgegenhaltungen:
- EP-A- 1 106 427
- EP-A- 1 160 124
- DE-A1- 19 653 516
- US-A- 5 934 749
- US-A- 5 997 091

## Beschreibung

Die Erfindung betrifft eine Kopfstütze für einen Fahrgastsitz entsprechend dem jeweils gleichlautenden Oberbegriff der einander nebengeordneten Ansprüche 1 bis 3.

Eine solche insbesondere in Verbindung mit Kraftfahrzeugsitzen verwendete Kopfstütze ist beispielsweise in der DE 196 53 516 A1 (vgl. DE 30 39 934 C2 beschrieben.

Bei einer Grundform der bekannten Kopfstütze (DE 196 53 516 A1) ist an jeder Seitenfläche des einen Polsterträger enthaltenden Mittelteils ein Seitenteil um eine Verstellachse schwenkgelagert, welche im oberen Bereich des Mittelteils, nach außen ragend, angeordnet ist. Die beiden Seitenteile lassen sich zusammen oder gesondert verschwenken, so dass dem Fahrgastkopf, ähnlich wie bei einer Flügelkopfstütze (vgl. z.B. DE 103 17 036 83), zusätzlich zu dem rückwärtigen Halt am Kopfanlagebereich auch ein seitlicher Halt zur Verfügung steht.

Ausgehend von der Kopfstütze gemäß der DE 196 53 516 A1, liegt der Erfindung die Aufgabe zugrunde, die bekannte Kopfstütze so weiter zu entwickeln, dass sich zusätzliche vorteilhafte Anwendungsmöglichkeiten ergeben.

Diese Aufgabe wird jeweils gemeinsam mit den Merkmalen des jeweils gleichlautenden Oberbegriffs in Verbindung mit den Merkmalen des jeweiligen kennzeichnenden Teils der Ansprüche 1 bis 3 gelöst.

Entsprechend dem Anspruch 1, der eine erste erfindungsgemäße Ausführungsform beschreibt, erstreckt sich die Verstellachse bezüglich einer mit der Schwenkachse gemeinsamen horizontalen Projektionsebene in einem ersten Winkel geneigt zur Schwenkachse und bezüglich des Kopfanlagebereichs nach hinten, wobei sich die Verstellachse in einer zur Schwenkachse parallelen Horizontalebene befindet.

Bei einer solchen Kopfstütze bilden die ausgeschwenkten Seitenteile gemeinsam mit dem Kopfanlagebereich einen sich vom Kopfanlagebereich weg nach außen öffnenden Raum bzw. eine Höhlung mit einem etwa trapezförmigen horizontalen Querschnitt.

Der Vorteil einer so ausgebildeten erfindungsgemäßen ersten Ausführungsform besteht darin, dass der Kopf des Fahrgastes nicht so eng umgrenzt ist, wie es bei der gattungsgemäßen bekannten Kopfstütze mit parallel zueinander ausschwenkbaren Seitenteilen der Fall ist. Vielmehr erhält bei der erfindungsgemäßen ersten Ausführungsform der Kopf des Fahrgastes, ähnlich wie bei der bereits erwähnten Flügelkopfstütze, einen als angenehm empfundenen zusätzlichen seitlichen Bewegungsraum.

Wesentlich ist dabei, dass sich der Fahrgast nach wie vor mit seinem Hinterkopf am Kopfanlagebereich des Mittelteils abstützen kann, so dass bei einer insbesondere crashbedingten Beschleunigung eine schlagartige Belastung des Fahrgastkopfes weitestgehend vermieden wird. Außerdem ist der Kopf des Fahrgastes in der zwischen den hochgeschwenkten Seitenteilen und dem Kopfanlagebereich geschaffenen Höhlung gewissermaßen zentriert, was sowohl dem Komfort- als auch dem Sicherheitsbedürfnis des Fahrgastes entspricht.

Entsprechend dem Kennzeichenteil des Anspruchs 2, der eine zweite erfindungsgemäße Ausführungsform beschreibt, erstreckt sich die Verstellachse bezüglich einer mit der Schwenkachse gemeinsamen vertikalen Projektionsebene mit einem zweiten Winkel geneigt zur Schwenkachse und bezüglich des Kopfanlagebereichs nach unten, wobei sich die Verstellachse in einer zur Schwenkachse parallelen Vertikalebene befindet.

Eine mit den vorbezeichneten Merkmalen versehene erfindungsgemäße Kopfstütze weist bei hochgeschwenkten Seitenteilen zwischen letzteren und dem Kopfanlagebereich eine Höhlung auf, welche im Vertikalschnitt nach unten hin trapezförmig konvergierend ausgebildet ist. Eine solche Höhlung mit ihren von den beiden Seitenteilen gebildeten seitlichen Schrägflächen ergibt unabhängig von einer etwaigen Höheneinstellbarkeit einer Kopfstütze den Vorteil einer weitestgehend abstützenden Anpassung der Höhlung an unterschiedliche individuelle Körpergrößen der Fahrgäste.

Der konvergierende Verlauf der durch die beiden ausgeschwenkten Seitenteile geschaffenen seitlichen Kopfanlageflächen ist auch vorteilhaft, weil der Fahrgast, wenn er zum Einnehmen einer Ruheposition seinen Körper ein wenig nach unten verlagert, eine zwar nicht einzwängende, jedoch genauere seitliche Führung seines Kopfes erhält.

Entsprechend dem Kennzeichenteil des Anspruchs 3 schließlich, der eine dritte erfindungsgemäße Ausführungsform beschreibt, sind die sich mit den Merkmalen der Ansprüche 1 und 2 jeweils verbindenden Vorteile miteinander dadurch kombiniert, dass sich die Verstellachse bezüglich einer mit der Schwenkachse gemeinsamen horizontalen Projektionsebene mit einem ersten Winkel geneigt zur Schwenkachse und bezüglich des Kopfanlagebereichs nach hinten erstreckt und dass sich zusätzlich die Verstellachse bezüglich einer mit der Schwenkachse gemeinsamen vertikalen Projektionsebene mit einem zweiten Winkel geneigt zur Schwenkachse und bezüglich des Kopfanlagebereichs nach unten erstreckt.

Weitere Erfindungsmerkmale sind Gegenstand der Unteransprüche.

In den Zeichnungen sind bevorzugte Ausführungsbeispiele entsprechend der Erfindung dargestellt, es zeigt
Fig. 1 eine schematische Seitenansicht einer Kopfstütze mit zurückgeschwenkten Seitenteilen,
Fig. 2 die Kopfstütze gemäß Fig. 1 mit nach vorn und nach oben ausgeschwenkten Seitenteilen,
Fig. 3 eine schematisch dargestellte teilweise Draufsicht auf eine Kopfstütze einer ersten Ausführungsform,
Fig. 4 eine rückseitige Ansicht der Kopfstütze entsprechend dem in Fig. 3 mit IV bezeichneten Ansichtspfeil,
Fig. 5 eine schematisch dargestellte teilweise Draufsicht auf eine Kopfstütze entsprechend einer zweiten Ausführungsform,
Fig. 6 eine rückseitige Ansicht der Kopfstütze entsprechend dem in Fig. 5 mit VI bezeichneten Ansichtspfeil,
Fig. 7 eine schematisch dargestellte teilweise Draufsicht auf eine Kopfstütze entsprechend einer dritten Ausführungsform,
Fig. 8 eine rückseitige Ansicht der Kopfstütze entsprechend dem in Fig. 7 mit VIII bezeichneten Ansichtspfeil,
Fig. 9 eine räumliche Darstellung einer dem dritten Ausführungsbeispiel entsprechenden Kopfstütze, ansonsten entsprechend dem in Fig. 1 mit IX bezeichneten Ansichtspfeil,
Fig. 10 die Kopfstütze gemäß Fig. 9, jedoch mit ausgeschwenkten Seitenteilen, ansonsten etwa entsprechend dem in Fig. 2 mit X bezeichneten Ansichtspfeil,
Fig. 11 und 12 mittels Konturlinien räumlich dargestellte, zum Teil aufgeschnittene Ansichten aus zwei unterschiedlichen Blickrichtungen von vorn der in Fig. 9 gezeigten Kopfstütze,
Fig. 13 die in Fig. 9 gezeigte Kopfstütze in Konturlinien dargestellt, wobei das linke Seitenteil zurückgeschwenkt und rechte Seitenteil ausgeschwenkt ist und
Fig. 14 eine der Darstellungsweise gemäß Fig. 13 entsprechende Kopfstütze von oben her betrachtet.

In den Zeichnungen ist jede Kopfstütze unabhängig von ihrer individuellen Ausgestaltung stets mit der Bezugsziffer 10 bezeichnet. Auch sind hinsichtlich ihrer Funktion einander entsprechende analoge Bauteile trotz unterschiedlicher Ausgestaltung mit denselben Bezeichnungen versehen.

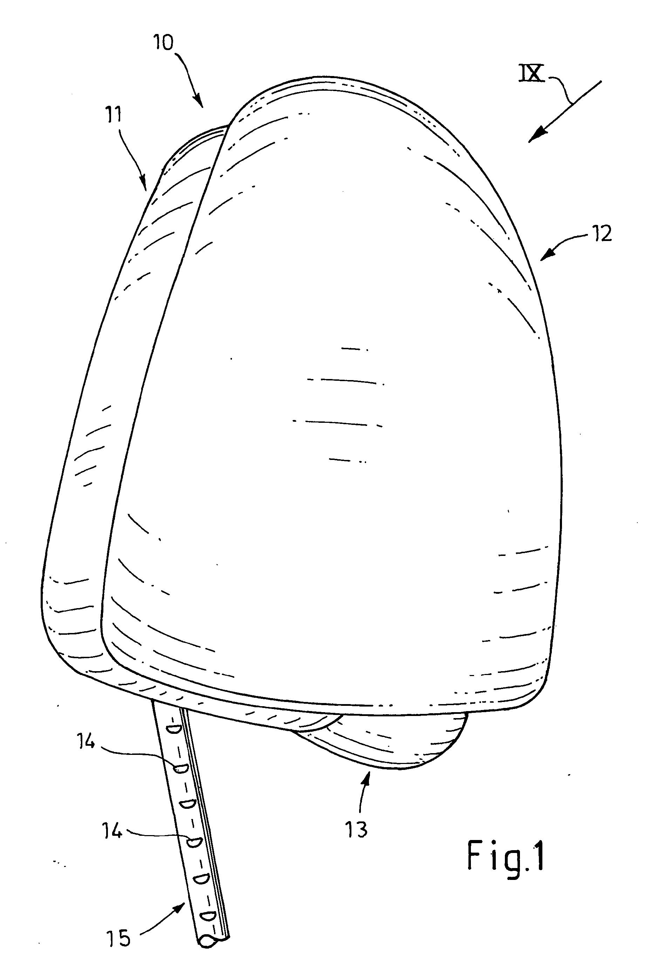

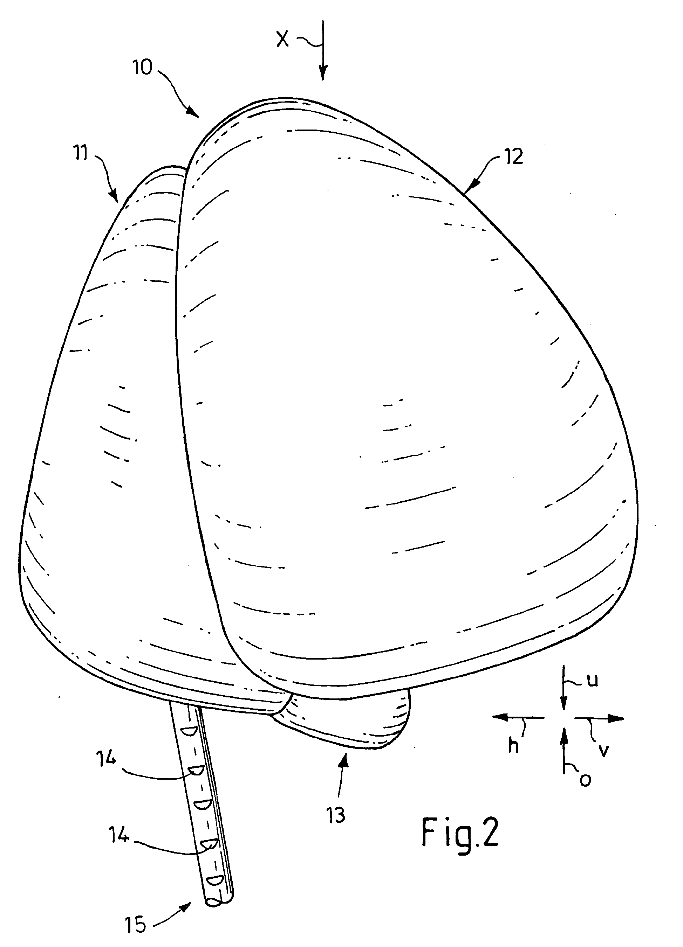

Entsprechend den Fig. 1 und 2 weist die Kopfstütze 10 ein Mittelteil 11, zwei Seitenteile 12 (nur ein Seitenteil 12 ist in Fig. 1 und Fig. 2 sichtbar), ein Nackenstützteil 13 sowie zwei mit Verstellkerben 14 versehene Tragstangen 15 (nur eine Tragstange 15 ist in Fig. 1 und Fig. 2 sichtbar) auf.

Fig. 1 zeigt ein Seitenteil 12 in zurückgeschwenkter Ruhelage und Fig. 2 das Seitenteil 12 in dessen vorgeschwenkter Betriebsposition.

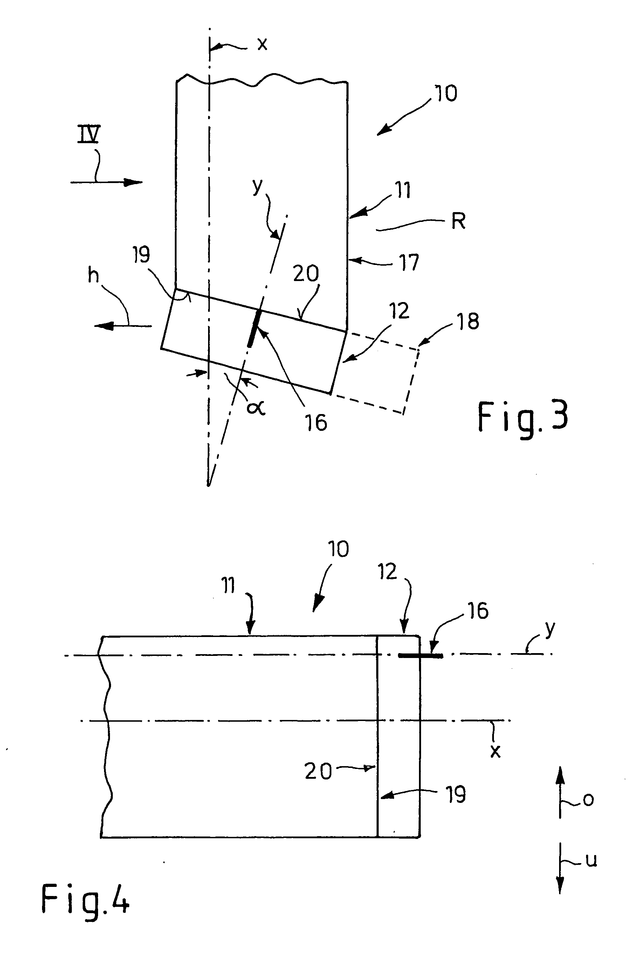

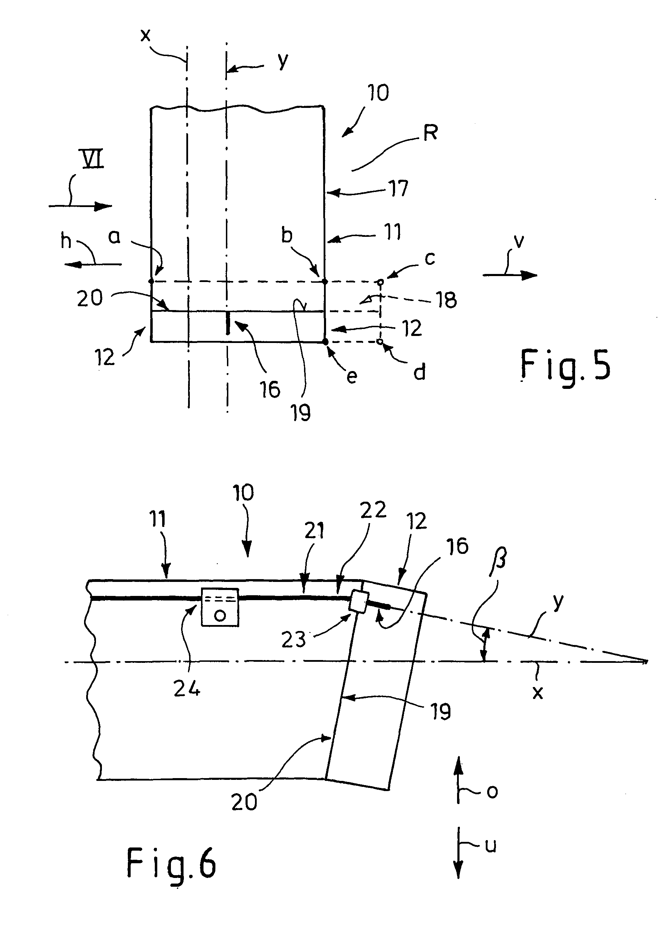

In den Fig. 3 und 4 sind die wesentlichen Merkmale einer ersten Ausführungsform dargestellt. Das Mittelteil 11 ist nur teilweise gezeigt. Auch ist aus den Fig. 3 und 4 nur ein Seitenteil 12 zu ersehen (s.a. Fig. 5, 6; Fig. 7, 8). Die strichpunktiert dargestellte horizontale Schwenkachse, um welche herum das Mittelteil 11 verschwenkt bzw. geneigt werden kann, ist mit x bezeichnet, während die Verstellachse, in welcher sich die Verstellwellenstümpfe 16 (oder ein Verstellachsstumpf) befinden, mit y bezeichnet ist. In den Fig. 3 und 4 ist jeweils nur ein Verstellwellenstumpf 16 gezeigt (s.a. Fig. 5, 6; Fig. 7, 8).

Anhand einer gemeinsamen Betrachtung der Fig. 3 und 4 ist vorstellbar, dass sich die Verstellachse y bezüglich einer mit der Schwenkachse x gemeinsamen horizontalen Projektionsebene (nicht dargestellt) mit einem ersten Winkel α geneigt zur Schwenkachse x und bezüglich des Kopfanlagebereichs 17 nach hinten in Richtung h erstreckt Zugleich befindet sich die Verstellachse y in einer zur Schwenkachse x parallelen Horizorrtalebene (nicht dargestellt).

Wenn nun das Seitenteil 12 nach vom in Richtung v und nach oben in Richtung o verschwenkt wird, so dass etwa die in Fig. 3 mit Strichlinie angedeutet Kontur entsteht, bilden beide ausgeschwenkten Seitenteile 12 mit ihren seitlichen Kopfianlageflächert 38 gemeinsam mit dem Kopfanlagebereich 17 einen sich vorn Kopfanlagebereich 17 weg nach außen bzw. nach vorn in Richtung v öffnenden Raum R bzw. eine Höhlung mit einem etwa trapezförmigen horizontalen Querschnitt.

Bei der in den Fig. 5 und 6 in Anlehnung an die Fig. 3 und 4 gezeigten Ausführungsform erstreckt sich die Verstellachse y zunächst einmal parallel zur Schwenkachse x (Fig. 5) sowie bezüglich einer mit der Schwenkachse x gemeinsamen vertikalen Projektionsebene (nicht gezeigt) mit einem zweiten Winkel β geneigt zur Schwenkachse und bezüglich des Kopfanlagebereichs 17 nach unten (Fig. 6). Zugleich befindet sich die Verstellachse y in einer zur Schwenkachse x parallelen Vertikalebene (nicht dargestellt).

Das Mittelteil 11 bildet jeweils eine Führungsfläche 19 und das Seitenteil 12 jeweils eine Gegenführungsfläche 20. Anhand der in Fig. 5 darstellten Strichlinie zwischen den Punkten a und b wird deutlich, mit welchem Ausmaß das Seitenteil 12 das Mittelteil 11 untergreift. Die zwischen den Punkten b, c, d und e mit Swichlinien angedeutete Kontur soll zeigen, wie das Seitenteil 12 nach oben in Richtung o und nach vorn in Richtung v ausgeschwenkt ist, so dass zwischen den Kopfanlageflächen 18 der Seitenteile 12 und dem Kopfanlagebereich 17 eine Höhlung bzw. ein Raum R entsteht, welcher im Vertikalschnitt nach unten hin trapezförmig konvergierend ausgebildet ist

Ein solcher Raum R mit seinen von den beiden Seitenteilen 12 gebildeten seitlichen Kopfanlageflächen 18 ergibt unabhängig von einer etwaigen Höheneinstellbarkeit einer Kopfstütze 10 den Vorteil einer weitestgehend abstützenden Anpassung des Raumes R an unterschiedliche individuelle Körpergrößen der Fahrgäste.

In Fig. 6 ist noch eine spezielle Ausführungsform angedeutet, wonach im Mittelteil 11 bzw. in dem in Fig. 6 nicht näher bezeichneten Polsterträger 26 eine Verbindungswelle 21 gelagert ist, deren beide Verbindungswellenenden 22 jeweils mittels eines Kardangelenks 23 mit je einem Verstellwellenstumpf 16 drehgekuppelt ist.

Die Verbindungswelle 21 ist außerdem von einem etwa klemmschellenartigen Bremselement 24 umgriffen. Ein solches aus Federstahlblech gefertigtes klemmschellenartiges Bremselement ist beispielsweise in der EP 0764 557 B1 dargestellt.

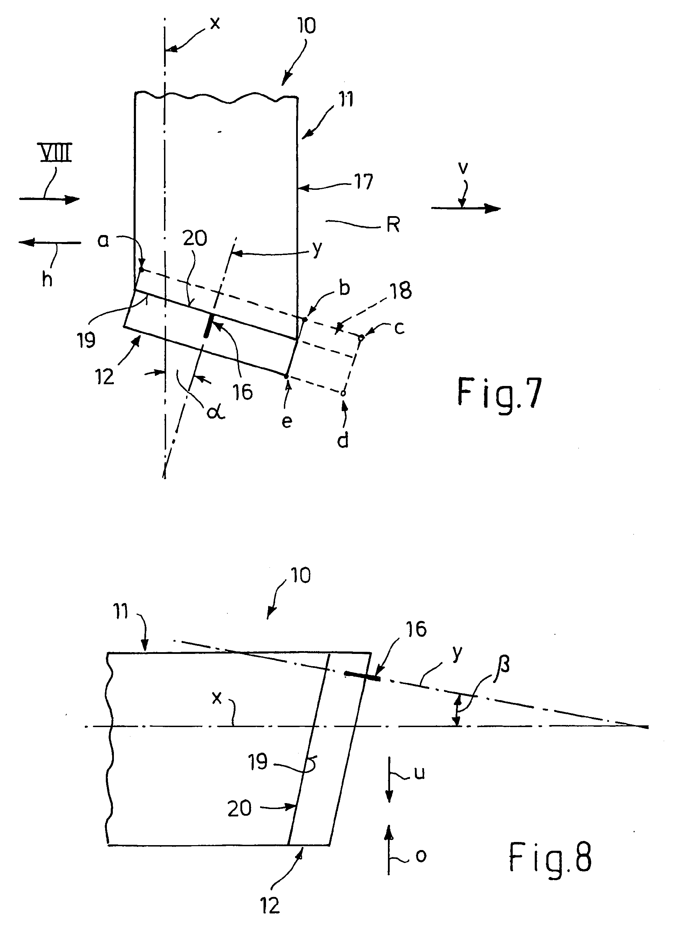

In den Fig. 7 und 8 ist in schematischer Weise eine dritte Ausführungsform gezeigt. Diese dritte Ausführungsform bildet gewissermaßen eine Kombination der ersten Ausführungsform (Fig. 3 und 4) mit der zweiten Ausführungsform (Fig. 5 und 6).

Und zwar erstreckt sich die Verstellachse y bezüglich einer mit der Schwenkachse x gemeinsamen horizontalen Projektionsebene (nicht dargestellt) mit einem ersten Winkel α geneigt zur Schwenkachse x und bezüglich des Kopfanlagebereichs 17 nach hinten in Richtung h, wobei sich zusätzlich die Verstellachse y bezüglich einer mit der Schwenkachse x gemeinsamen vertikalen Projektionsebene (nicht dargestellt) mit einem zweiten Winkel β geneigt zur Schwenkachse x und bezüglich des Kopfanlagebereichs 17 nach unten (Richtung u) erstreckt.

Gemäß Fig. 7 wird anhand der gestrichelten Linie zwischen den Punkten a und b deutlich, in welchem Ausmaß das Seitenteil 12 das Mittelteil 11 unterschneidet. Zugleich wird anhand der gestrichelten Linie zwischen den Punkten b, c, d, und e deutlich, dass zwischen dem Kopfanlagebereich 17 und den Kopfanlageflächen 18 ein Raum R gebildet ist, dessen horizontaler Querschnitt ein sich außen bzw. nach vorne in Richtung v erweiterndes Trapez darstellt.

Außerdem wird bei gemeinsamer Betrachtung der Fig. 7 und 8 deutlich, dass bei ausgeschwenkten Seitenteilen 12 deren Kopfanlageflächen 18 gemeinsam mit dem Kopfanlagebereich 17 einen Raum R bilden, dessen Vertikalquerschnitt ein nach unten hin in Richtung u konvergierende Trapez darstellt.

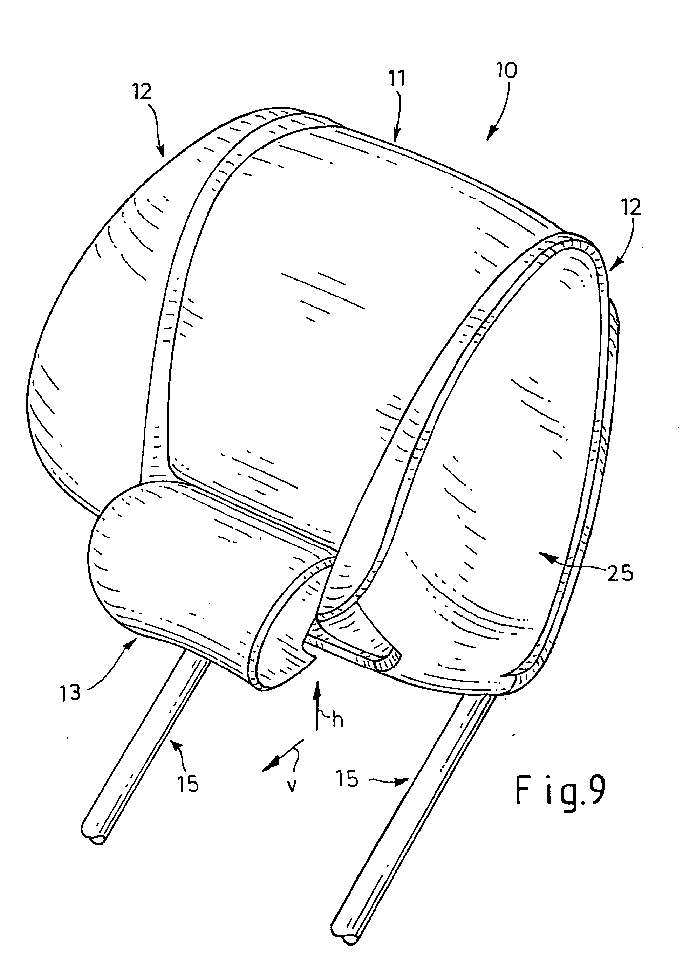

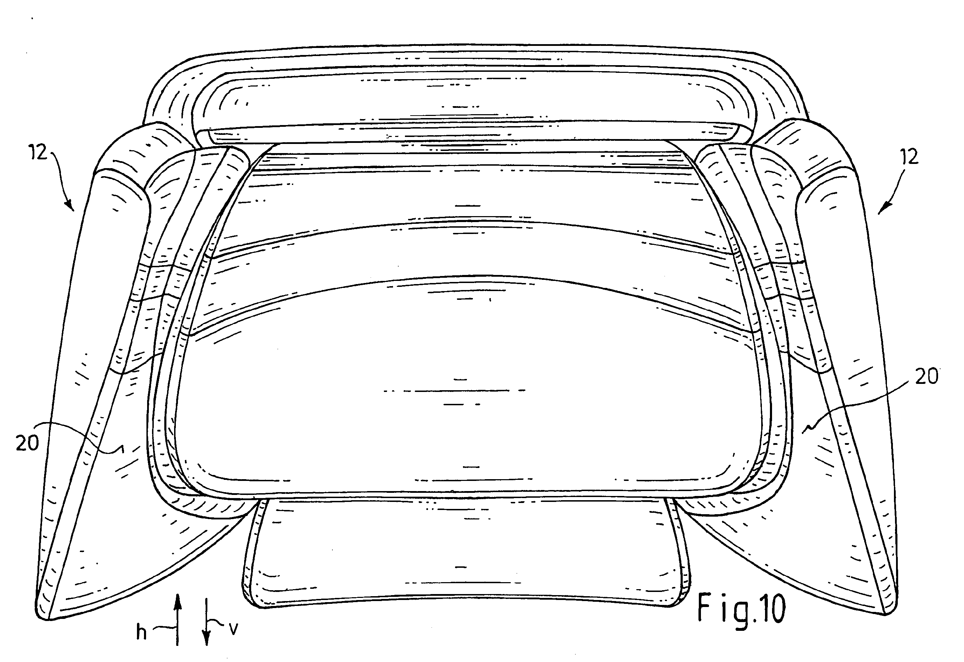

Aus Fig. 9 gehen insbesondere das Mittelteil 11, die beiden Seitenteile 12 und das sich in seiner nach vom in Richtung v und nach oben in Richtung h ausgeschwenkte Nackenstützteil 13 hervor. Die Bauteile 11,12,12 sowie 13 sind jeweils mit einem Bezug 25 (beispielsweise textiler Stoff oder Leder) versehen. Fig. 10 zeigt im Unterschied zu Fig. 9 die in einer kombinierten Schwenkbewegung sowohl nach vom in Richtung v als auch nach oben in Richtung h ausgeschwenkten Seitenteile 12. In Fig. 10 sind auch die Gegenführungsflächen 20 der Seitenteile 12 zu erkennen.

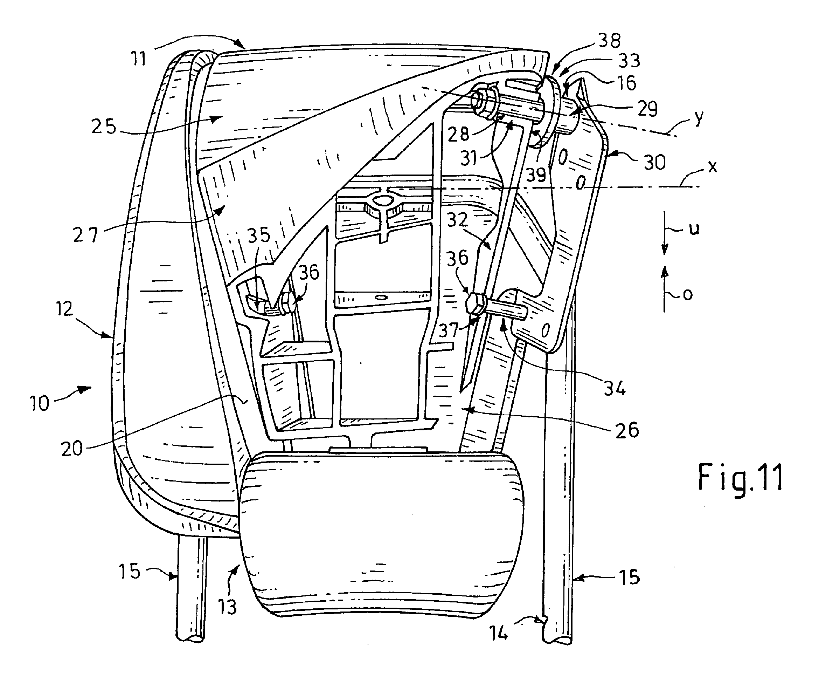

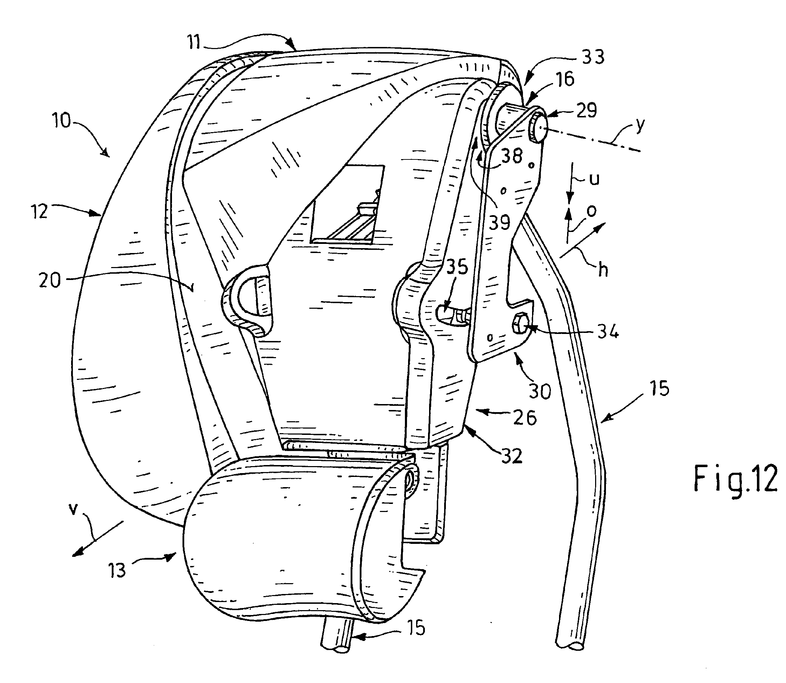

Anhand der Fig. 11 und 12 ist die Struktur der Kopfstütze, die einen Polsterträger 26 sowie die von dem Bezug 25 umspannte Schaumpolsterung 27 zeigt, zu erkennen. Koaxial zur Verstellachse y ist der Verstellwellenstumpf 16 angeordnet, dessen inneres Ende 28 seitlich im Polsterträger 26 und dessen äußeres Ende 29 im Seitenteil 12, und zwar an einer Tragplatte 30, gegen Axialverschiebung gesichert ist. Dabei ist das äußere Ende 29 mit der Tragplatte 30 drehfest und das innere Ende 28 des Verstellwellenstumpfs 16 in einer Lagerbuchse 31 im Polsterträger 26, und zwar in dessen Seitenwand 32, drehgelagert.

Zwischen dem inneren Ende 28 und dem äußeren Ende 29 des Verstellwellenstumpfs 16 ist ein Bremselements 33 angeordnet, dessen Primärteil, eine kreisförmige Bremsscheibe 38, mit dem Versteitwellenstumpf 16 und dessen Sekundärteil, nämlich ein nach außen weisender Bereich 39 der Seitenwand 32 des Polsterträgers 26, mit letzterem fest ist

Die Tragplatte 30 des Seitenelements 12 weist einen Führungsbolzen 34 auf, welcher in einer Kulisse 35, gebildet von der Seitenwand 32 des Polsterträgers 26, geführt ist. Der Führungsbolzen 34 ist mittels seines Bolzenkopfs 36 und mittels einer Unterlegscheibe 37 bezüglich der Kulisse 35 axial gesichert. Durch die Bolzen-/Kulissenanordnung 34, 35 wird das zugeordnete Seitenteil 12 mittels dessen Tragplatte 30 verkantungsfrei und sicher bezüglich des Mittelteils 11 schwenkgeführt. Zugleich erfolgt eine stufenlose Schwenkarretierung mittels des Bremselements 33.

Anhand von Fig. 11 ist auch deutlich zu erkennen, dass die Verstellachse y des Verstellwellenstumpfs 16 sowohl nach hinten, d.h. bezüglich Fig. 11 in die Papierebene hinein, als auch zugleich nach unten in Richtung u geneigt ist. Die Kopfstütze 10 gemäß den Fig. 9-14 entspricht der mit der in den Fig. 7 und 8 schematisch gezeigten dritten Ausführungsform.

Während speziell entsprechend der in Fig. 6 gezeigten Anordnung mit einem Kardangelenk 23 die beiden Seitenteile 12 nur gemeinsam miteinander bewegungsgekuppelt verschwenkt werden können, ist bei den anderen Ausführungen, so auch bei der Ausführungsform entsprechend den Fig. 9-14 in Anpassung an die individuell gewünschten Verstellverhältnisse eine unabhängige Schwenkbewegung der beiden Seitenteile 12 voneinander möglich.

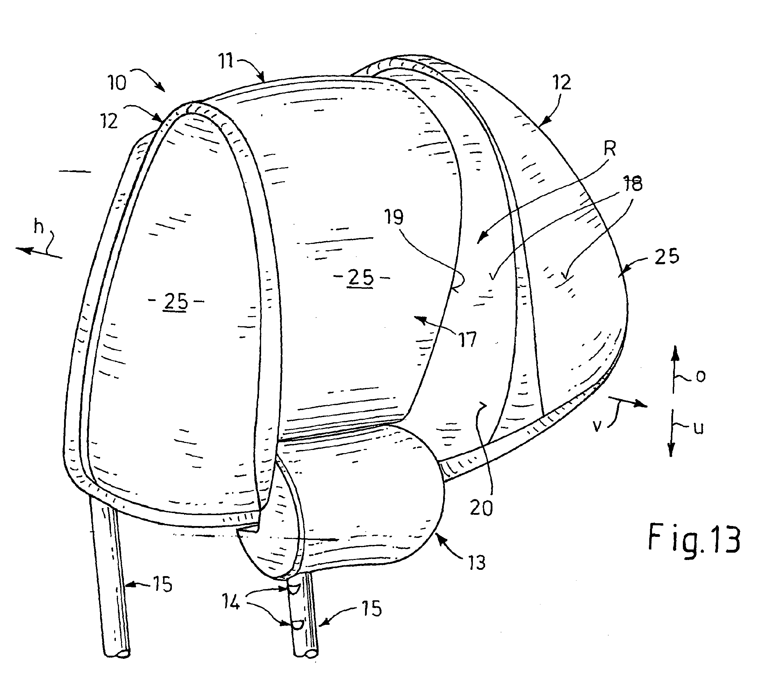

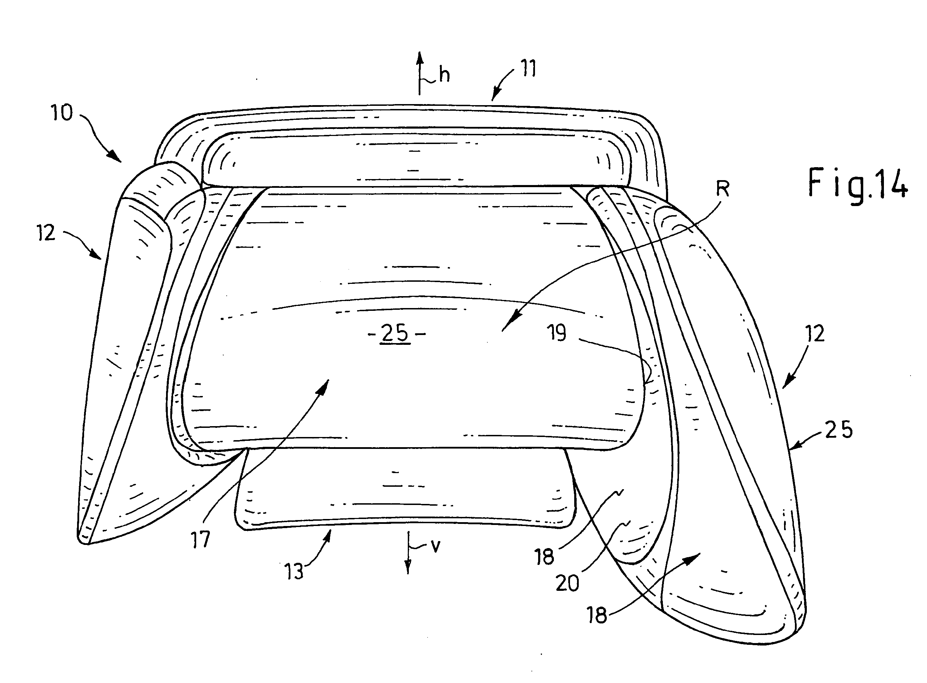

So zeigen die Fig. 13 und 14, dass das linke Seitenteil 12 sich in seiner zurückgeschwenkten Ruheposition befindet, während das rechte Seitenteil 12 gänzlich ausgeschwenkt ist. In den Fig. 13 und 14 sind auch die Führungsflächen 19 und die Gegenführungsflächen 20 bezeichnet.

## Patentansprüche

1. Kopfstütze (10) für einen Fahrgastsitz, mit einem oben an einer Sitzlehne mittels z.B. mindestens einer Tragstange (15) gehaltenen, mit einem Polster (25, 27) versehenen, einen Polsterträger (26) beinhaltenden Mittelteil (11), dessen vorderer Bereich einen Kopfanlagebereich (17) aufnimmt, wobei der Polsterträger (26) um eine horizontale Schwenkachse (x) schwenkgelagert ist, und wobei an beiden Seiten des Kopfanlagebereichs (17) jeweils ein insbesondere mit einem Polster (25, 27) versehenes Seitenteil (12) um eine Verstellachse (y) schwenkgelagert ist, welche sich jeweils in einer Seitwärtsrichtung bezüglich des Mittelteils (11) erstreckt und welche im oberen Bereich des Mittelteils (11) angeordnet ist, **dadurch gekennzeichnet, dass** sich die Verstellachse (y) bezüglich einer mit der Schwenkachse (x) gemeinsamen horizontalen Projektionsebene mit einem ersten Winkel (α) geneigt zur Schwenkachse (x) und bezüglich des Kopfanlagebereichs (17) nach hinten (h) erstreckt, wobei sich die Verstellachse (y) in einer zur Schwenkachse (x) parallelen Horizontalebene befindet.

2. Kopfstütze entsprechend dem Oberbegriff des Anspruchs 1, **dadurch gekennzeichnet, dass** sich die Verstellachse (y) bezüglich einer mit der Schwenkachse (x) gemeinsamen vertikalen Projektionsebene mit einem zweiten Winkel (β) geneigt zur Schwenkachse (x) und bezüglich des Kopfanlagebereichs (17) nach unten (u) erstreckt, wobei sich die Verstellachse (y) in einer zur Schwenkachse (x) parallelen Vertikalebene befindet.

3. Kopfstütze entsprechend dem Oberbegriff des Anspruchs 1, **dadurch gekennzeichnet, dass** sich die Verstellachse (y) bezüglich einer mit der Schwenkachse (x) gemeinsamen horizontalen Projektionsebene mit einem ersten Winkel (α) geneigt zur Schwenkachse (x) und bezüglich des Kopfanlagebereichs (17) nach hinten erstreckt und dass sich zusätzlich die Verstellachse (y) bezüglich einer mit der Schwenkachse (x) gemeinsamen vertikalen Projektionsebene mit einem zweiten Winkel (β) geneigt zur Schwenkachse (x) und bezüglich des Kopfanlagebereichs (17) nach unten (u) erstreckt.

4. Kopfstütze nach einem der Ansprüche 1 bis 3, **dadurch gekennzeichnet, dass** koaxial zur Verstellachse (y) ein Verstellwellenstumpf (16) oder ein Verstellachsstumpf angeordnet ist, dessen inneres Ende (28) seitlich im Polsterträger (26) und dessen äußeres Ende (29) im Seitenteil (12) gegen Axialverschiebung gesichert ist.

5. Kopfstütze nach Anspruch 4, **dadurch gekennzeichnet, dass** das äußere Ende (29) des Verstellwellenstumpfs (16) mit dem Seitenteil (12) drehfest und das innere Ende (28) des Verstellwellenstumpfs (16) im Polsterträger (26) drehgelagert ist.

6. Kopfstütze nach Anspruch 5, **dadurch gekennzeichnet, dass** das innere Ende (28) des Verstellwellenstumpfs (16) in einer Seitenwand (32) des Polsterträgers (26) drehgelagert ist.

7. Kopfstütze nach einem der Ansprüche 4 bis 6, **dadurch gekennzeichnet, dass** zwischen dem inneren Ende (28) und dem äußeren Ende (29) des Verstellwellenstumpfs (16) ein Bremselement (33) angeordnet ist, dessen Primärteil (38) mit dem Verstellwellenstumpf (16) und dessen Sekundärteil (39) mit dem Polsterträger (26) oder dessen Primärteil mit dem Polsterträger und dessen Sekundärteil mit dem Verstellwellenstumpf fest ist.

8. Kopfstütze nach einem der Ansprüche 5 bis 7, **dadurch gekennzeichnet, dass** das Seitenteil (12) einen Führungsbolzen (34) aufweist, welcher in einer Kulisse (35) des Polsterträgers (26) geführt ist.

9. Kopfstütze nach Anspruch 8, **dadurch gekennzeichnet, dass** die Kulisse (35) in der Seitenwand (32) des Polsterträgers (26) angeordnet ist.

10. Kopfstütze nach Anspruch 8 oder nach Anspruch 9, **dadurch gekennzeichnet, dass** der Führungsbolzen (34) an oder in der Kulisse (35) axial gesichert ist.

11. Kopfstütze nach einem der Ansprüche 1 bis 10, **dadurch gekennzeichnet, dass** die Verstellachse (y) sowohl eine Führungsfläche (19) des Mittelteils (11) als auch eine Gegenführungsfläche (20) des Seitenteils (12) durchsetzt.

12. Kopfstütze nach Anspruch 11, **dadurch gekennzeichnet, dass** die Verstellachse (y) die eine Ebene bildende Führungsfläche (19) und die eine Ebene bildende Gegenführungsfläche (20) jeweils orthogonal durchsetzt.

13. Kopfstütze nach einem der Ansprüche 1 bis 12, **gekennzeichnet durch** eine im Polsterträger (26) gelagerte Verbindungswelle (21), deren beide Verbindungswellenenden (22) jeweils mittels eines Kardangelenks (23) mit je einem Verstellwellenstumpf (16) drehgekuppelt sind.

14. Kopfstütze nach Anspruch 13, **dadurch gekennzeichnet, dass** die Verbindungswelle (21) von einem Bremselement (24) umgriffen und/oder mit einem motorischen Antrieb bewegungsverbunden ist

15. Kopfstütze nach einem der Ansprüche 1 bis 14, **gekennzeichnet durch** ein unten am Polsterträger (26) gehaltenes, zwischen den beiden Seitenteilen (12) angeordnetes, bezüglich des Kopfanlagebereichs ein- und ausschwenkbares Nackenstützenteil (13).

16. Kopfstütze nach einem der Ansprüche 1 bis 15, **dadurch gekennzeichnet, dass** die Schwenkverstellung des jeweiligen Seitenteils (12) gegebenenfalls unter Einbeziehung eines Bremselements (24, 33) stufenlos oder raststufenweise erfolgt.

## Claims

1. Headrest (10) for a passenger seat, having a central part (11) which is held on a seat back at the top by means of, for example, at least one carrying bar (15), is provided with a cushion (25, 27) and contains a cushion-carrier (26), and whose front region receives a head-contact region (17), wherein the cushion-carrier (26) is mounted for swivelling about a horizontal axis of swivelling (x) and wherein a side part (12), which is provided, in particular, with a cushion (25, 27), is mounted on each of the two sides of the head-contact region (17) for swivelling about an axis of adjustment (y) which extends in a lateral direction, in each case, with respect to the central part (11) and which is arranged in the upper region of said central part (11),
**characterised in that**
the axis of adjustment (y) extends, with respect to a horizontal plane of projection which is common to the axis of swivelling (x), in a manner inclined at a first angle (α) in relation to said axis of swivelling (x) and rearwards (h) with respect to the head-contact region (17), said axis of adjustment (y) being located in a horizontal plane which is parallel to the axis of swivelling (x).

2. Headrest corresponding to the pre-characterising clause of claim 1,
**characterised in that**
the axis of adjustment (y) extends, with respect to a vertical plane of projection which is common to the axis of swivelling (x), in a manner inclined at a second angle (β) in relation to said axis of swivelling (x) and downwards (u) with respect to the head-contact region (17), said axis of adjustment (y) being located in a vertical plane which is parallel to the axis of swivelling (x).

3. Headrest corresponding to the pre-characterising clause of claim 1,
**characterised in that**
the axis of adjustment (y) extends, with respect to a horizontal plane of projection which is common to the axis of swivelling (x), in a manner inclined at a first angle (α) in relation to said axis of swivelling (x) and rearwards (h) with respect to the head-contact region (17), and that, in addition, the axis of adjustment (y) extends, with respect to a vertical plane of projection which is common to the axis of swivelling (x), in a manner inclined at a second angle (β) in relation to said axis of swivelling (x) and downwards (u) with respect to the head-contact region (17).

4. Headrest according to one of claims 1 to 3,
**characterised in that**
there is arranged, coaxially with the axis of adjustment (y), an adjusting stub shaft (16) or adjusting stub spindle, whose inner end (28) is secured laterally in the cushion-carrier (26) and whose outer end (29) is secured in the side part (12) against axial displacement.

5. Headrest according to claim 4,
**characterised in that**
the outer end (29) of the adjusting stub shaft (16) is mounted so as to be rotationally locked with the side part (12) and the inner end (28) of said adjusting stub shaft (16) is rotatably mounted in the cushion-carrier (26).

6. Headrest according to claim 5,
**characterised in that**
the inner end (28) of the adjusting stub shaft (16) is rotatably mounted in a side wall (32) of the cushion-carrier (26).

7. Headrest according to one of claims 4 to 6,
**characterised in that**
a braking element (33), whose primary part (38) is integral with the adjusting stub shaft (16) and whose secondary part (39) is integral with the cushion-carrier (26), or whose primary part is integral with the cushion-carrier and whose secondary part is integral with the adjusting stub shaft, is arranged between the inner end (28) and the outer end (29) of the adjusting stub shaft (16).

8. Headrest according to one of claims 5 to 7,
**characterised in that**
the side part (12) has a guide bolt (34) which is guided in a gate (35) in the cushion-carrier (26).

9. Headrest according to claim 8,
**characterised in that**
the gate (35) is arranged in the side wall (32) of the cushion-carrier (26).

10. Headrest according to claim 8 or 9,
**characterised in that**
the guide bolt (34) is secured axially on or in the gate (35).

11. Headrest according to one of claims 1 to 10,
**characterised in that**
the axis of adjustment (y) passes through both a guide face (19) on the central part (11) and also a counter-guide face (20) on the side part (12).

12. Headrest according to claim 11,
**characterised in that**
the axis of adjustment (y) passes, orthogonally in each case, through the guide face (19) which forms a plane and the counter-guide face (20) which forms a plane.

13. Headrest according to one of claims 1 to 12,
**characterised by**
a connecting shaft (21) which is mounted in the cushion-carrier (26) and whose two ends (22) are each rotationally coupled to an adjusting stub shaft (16) by means of a universal joint (23) in each case.

14. Headrest according to claim 13,
**characterised in that**
the connecting shaft (21) is encompassed by a braking element (24) and/or kinetically connected to a motorised drive.

15. Headrest according to one of claims 1 to 14,
**characterised by**
a neck-rest part (13) which is held on the cushion carrier (26) at the bottom, is arranged between the two side parts (12) and can be swivelled in and out with respect to the head-contact region.

16. Headrest according to one of claims 1 to 15,
**characterised in that**
the swivelling adjustment of the particular side part (12) takes place continuously or in latching steps, optionally with the incorporation of a braking element (24, 33).

## Revendications

1. Appuie-tête (10) pour un siège de véhicule, avec une partie médiane (11) contenant un support de rembourrage (26), muni d'un rembourrage (25, 27), maintenue en partie supérieure sur un dossier au moyen par exemple d'au moins une barre support (15), partie médiane dont la zone avant reçoit une zone d'appui de tête (17), le support de rembourrage (26) étant monté à pivotement autour d'un axe de pivotement (x) horizontal et, sur chacun des deux côtés de la zone d'appui de tête (17), une partie latérale (12), munie en particulier d'un rembourrage (25, 27), étant montée à pivotement autour d'un axe de réglage (y) s'étendant respectivement dans un sens orienté vers le côté par rapport à la partie médiane (11) et disposé dans la zone supérieure de la partie médiane (11), **caractérisé en ce que**, par rapport à un plan de projection horizontal commun à l'axe de pivotement (x), l'axe de réglage (y) est incliné d'un premier angle (α) par rapport à l'axe de pivotement (x) et s'étend vers l'arrière (h) par rapport à la zone d'appui de tête (17), l'axe de réglage (y) se trouvant dans un plan horizontal parallèle à l'axe de pivotement (x).

2. Appuie-tête selon le préambule de la revendication 1, **caractérisé en ce que**, par rapport à un plan de projection vertical commun à l'axe de pivotement (x), l'axe de réglage (y) est incliné d'un deuxième angle (β) par rapport à l'axe de pivotement (x) et s'étend vers le bas (u) par rapport à la zone d'appui de tête (17), l'axe de réglage (y) se trouvant dans un plan vertical parallèle à l'axe de pivotement (x).

3. Appuie-tête selon le préambule de la revendication 1, **caractérisé en ce que**, par rapport à un plan de projection horizontal commun à l'axe de pivotement (x), l'axe de réglage (y) est incliné d'un premier angle (α) par rapport à l'axe de pivotement (x) et s'étend vers l'arrière par rapport à la zone d'appui de tête (17), et **en ce que**, en plus, par rapport à un plan de projection vertical commun à l'axe de pivotement (x), l'axe de réglage (y) est incliné d'un deuxième angle (β) par rapport à l'axe de pivotement (x) et s'étend vers le bas (u) par rapport à la zone d'appui de tête (17).

4. Appuie-tête selon l'une des revendications 1 à 3,
**caractérisé en ce qu'**un bout d'arbre de réglage (16) ou un bout d'axe de réglage est disposé coaxialement à l'axe de réglage (y), bout dont l'extrémité intérieure (28) est assurée latéralement contre tout déplacement dans le support de rembourrage (26) et dont l'extrémité extérieure (29) est assurée contre tout déplacement axial dans la partie latérale (12).

5. Appuie-tête selon la revendication 4, **caractérisé en ce que** l'extrémité extérieure (29) du bout d'arbre de réglage (16) est montée de manière assujettie en rotation avec la partie latérale (12) et l'extrémité intérieure (28) du bout d'arbre de réglage (16) est montée à rotation dans le support de rembourrage (26).

6. Appuie-tête selon la revendication 5, **caractérisé en ce que** l'extrémité intérieure (28) du bout d'arbre de réglage (16) est montée à rotation dans une paroi latérale (32) du support de rembourrage (26).

7. Appuie-tête selon l'une des revendications 4 à 6,
**caractérisé en ce que**, entre l'extrémité intérieure (28) et l'extrémité extérieure (29) du bout d'arbre de réglage (16), est disposé un élément de freinage (33), dont la partie primaire (38) est fixée au bout d'arbre de réglage (16) et dont la partie secondaire (39) est fixée au support de rembourrage (26), ou dont la partie primaire est fixée au support de rembourrage et dont la partie secondaire est fixée au bout d'arbre de réglage.

8. Appuie-tête selon l'une des revendications 5 à 7,
**caractérisé en ce que** la partie latérale (12) présente un boulon de guidage (34), guidé dans une coulisse (35) du support de rembourrage (26).

9. Appuie-tête selon la revendication 8, **caractérisé en ce que** la coulisse (35) est disposée dans la paroi latérale (32) du support de rembourrage (26).

10. Appuie-tête selon la revendication 8 ou selon la revendication 9, **caractérisé en ce que** le boulon de guidage (34) est assuré axialement sur ou dans la coulisse (35).

11. Appuie-tête selon l'une des revendications 1 à 10, **caractérisé en ce que** l'axe de réglage (y) traverse tant une face de guidage (19) de la partie médiane (11) qu'également une face conjuguée de guidage (20) de la partie latérale (12).

12. Appuie-tête selon la revendication 11, **caractérisé en ce que** l'axe de réglage (y) traverse chaque fois perpendiculairement la face de guidage (19) formant un plan, et la face conjuguée de guidage (20) formant un plan.

13. Appuie-tête selon l'une des revendications 1 à 12, **caractérisé par** un arbre de liaison (21), monté dans le support de rembourrage (26), dont chacune des deux extrémités d'arbre de liaison (22) sont couplées en rotation, au moyen d'un joint de cardan (23), à un bout d'arbre de réglage (16) respectif.

14. Appuie-tête selon la revendication 13, **caractérisé en ce que** l'arbre de liaison (21) est entouré par un élément de freinage (24) et/ou relié cinématiquement à un entraînement à moteur.

15. Appuie-tête selon l'une des revendications 1 à 14, **caractérisé par** une partie d'appui de nuque (13), susceptible d'être rétractée et déployée par pivotement par rapport à la zone d'appui de tête, disposée entre les deux parties latérales (12), maintenue sur le support de rembourrage (26).

16. Appuie-tête selon l'une des revendications 1 à 15, **caractérisé en ce que** le réglage par pivotement de la partie latérale (12) respective s'effectue le cas échéant en faisant intervenir un élément de freinage (24, 33) de manière progressive continue ou de manière échelonnée selon un encliquetage.
